# EUROPEAN PATENT SPECIFICATION

(11) **EP 1 510 722 B1**
(45) Date of publication and mention of the grant of the patent: **10.09.2008**
(21) Application number: 03736066.6
(22) Date of filing: 06.06.2003
(51) Int. Cl.: F16F 15/03, F16F 7/00, F16F 6/00

(54) **ELECTROMAGNETIC DAMPER**
ELEKTROMAGNETISCHER DÄMPFER
AMORTISSEUR ELECTROMAGNETIQUE

(30) Priority: 06.06.2002 JP 2002165781
(43) Date of publication of application: 02.03.2005
(73) Proprietor: KAYABA INDUSTRY CO., LTD., Minato-Ku, Tokyo 105-6190 (JP); The Foundation for the Promotion of Industrial Science, Meguro-ku, Tokyo 153-0041 (JP)
(72) Inventor: KONDO, Takuhiro, c/o KAYABA INDUSTRY CO., LTD. WTC, Minato-ku, Tokyo 105-6190 (JP); SUDA, Yoshihiro, Oota-ku, Tokyo 145-0071 (JP)
(74) Representative: Grünecker, Kinkeldey, Stockmair & Schwanhäusser Anwaltssozietät
(86) International application number: PCT/JP2003/007181
(87) International publication number: WO 2003/104680

(56) References cited:
- JP-A- 10 089 406
- JP-A- 62 004 937
- JP-A- 2003 042 224
- JP-A- 2003 104 025
- JP-A- 2003 223 220
- JP-A- 2003 227 543
- JP-U- 3 023 234
- US-A- 5 070 284
- US-A- 5 775 469

## Description

### TECHNICAL FIELD

The present invention relates to an electromagnetic shock absorber according to the preamble of claim 1 which converts telescopic motion of a shock absorber body into rotary motion of a motor utilizing a ball screw mechanism and damps vibration utilizing electromagnetic resistance generated by the motor.

### BACKGROUND ART

An electromagnetic shock absorber of the above type is known from US.A.5070284. Related shock absorbers are known from JP 2001 334982 A, JP 62004937 A and WO-A-9216769.

A suspension unit for a vehicle in which a hydraulic shock absorber is arranged, in parallel with a suspension spring, between a car body and an axle is widely known.

Further, Japanese Patent Laid-Open Publication No.5-44758A has disclosed a suspension unit in which magnet coils are built in a part of a hydraulic shock absorber. In this suspension unit, coils are attached to a cylinder of the hydraulic shock absorber and magnets are attached to a piston rod, respectively, and an electric current is applied to the coils, thereby generating driving force (electromagnetic force) along the direction of a stroke of the piston rod so as to control the quantity of telescopic motion of the suspension unit according to the traveling conditions of a vehicle.

However, in such a suspension unit in which magnet coils are built in a hydraulic shock absorber, a hydraulic pressure, a power source, and the like are required, whereby it is complicated in structure and it is disadvantageous in respect of the costs.

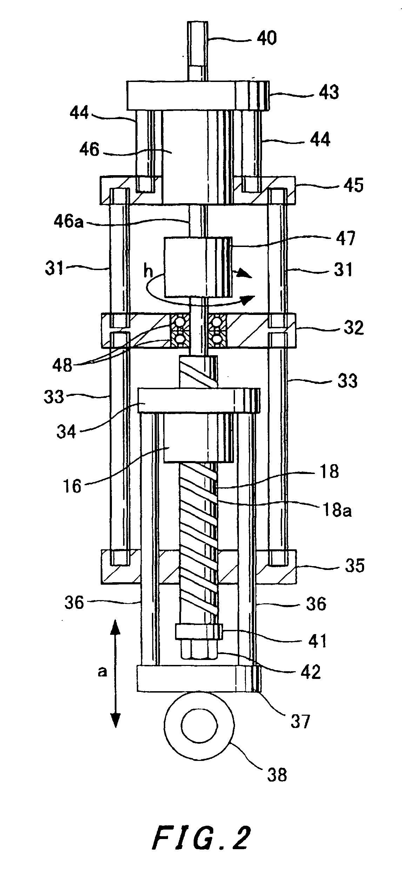

On the other hand, a new electromagnetic shock absorber which does not require a hydraulic pressure, an air pressure, a power source, or the like is under study. Such an electromagnetic shock absorber is basically constituted as shown in an exemplified model of FIG. 2.

In this electromagnetic shock absorber, telescopic motion of the shock absorber is converted into rotary motion utilizing a ball screw mechanism and a motor is driven due to the rotary motion, and the telescopic motion of the shock absorber is damped by resistance generated at this time resulting from electromagnetic force.

A motor 50 is supported by a supporting frame 60, and there is provided a traveling frame 40 which is guided in such a manner that the traveling frame 40 can freely slide with respect to the supporting frame 60. Between a screw shaft 46 and a ball nut 47 which constitute a ball screw mechanism 45, the ball nut 47 is attached to the above-mentioned traveling frame 40, and the screw shaft 46 to be spirally engaged with the ball nut 47 is coaxially connected with a rotary shaft 51 of the above-mentioned motor 50 through a coupling 55.

The supporting frame 60 has an upper bracket 61, a lower bracket 62, and an intermediate bracket 63 which is located between the upper bracket 61 and the lower bracket 62. The supporting frame 60 is constituted in such a manner that these brackets are connected with each other by means of a plurality of connecting rods 64. The above-mentioned screw shaft 46 is rotatably supported, by a bearing 65 installed at the intermediate bracket 63, in such a manner that the screw shaft 46 goes through the bearing 65.

The above-mentioned traveling frame 40 has an upper bracket 41, a lower bracket 42, and a plurality of guide rods 43 which connect these brackets 41 and 42. The guide rods 43 of the traveling frame 40 slidably go through the lower bracket 32 of the above-mentioned supporting frame 30, whereby the guide rods 43 guide the traveling frame 40 in such a manner that the traveling frame 40 can slide in parallel with the screw shaft 46.

The above-mentioned ball nut 47 is attached to the upper bracket 41, and a large number of balls are arranged along a thread groove inside the ball nut 47 although these balls are not shown in the drawing. The above-mentioned screw shaft 46 is spirally engaged with the ball nut 47 through the above-mentioned large number of balls.

When the ball nut 47 together with the traveling frame 40 moves along the screw shaft 46, rotary motion is applied to the screw shaft 46 by the ball screw mechanism 45.

If the electromagnetic shock absorber is interposed between a car body and an axle, for example, and is utilized as a suspension of the car, a mounting bracket 66 of the supporting frame 60 which is located above the motor 50 and at an upper end of the electromagnetic shock absorber will be connected on the side of the car body, and a mounting eye 44 which is provided at the lower bracket 42 of the traveling frame 40 at a lower end of the electromagnetic shock absorber will be connected on the axle side.

When vibration inputs into the electromagnetic shock absorber from the surface of a road and the ball nut 47 makes linear motion in the direction of an arrow X together with the traveling frame 40, the screw shaft 46 makes rotary motion at the position due to spiral engagement of the thread groove of the screw shaft 46 and the balls which are arranged along the thread groove inside the ball nut 47.

The rotary motion of the screw shaft 46 is transmitted, as rotary motion of a rotary shaft 51 in the direction of an arrow Y, through the coupling 55 attached to an upper end of the screw shaft 46, thereby rotating the motor 50.

In the motor 50, for example permanent magnets are arranged at a rotor of the motor 50, and coils of a stator of the respective magnetic poles short-circuit directly to each other or the coils are connected via a control circuit so that desired electromagnetic force can be obtained. With the progress of rotations of the rotor of the motor 50, electric currents flow through the coils due to induced electromotive force. At this time, the electromagnetic force which arises resulting from the flow of electric currents becomes torque to oppose against the rotations of the rotary shaft 51 of the motor 50.

Additionally, it is possible to freely change the strength of torque which is based on the electromagnetic force and opposes against the direction of rotations of the rotary shaft 51 by changing the strength of resistance in the control circuit which is connected with the coils.

Electromagnetic torque which becomes resistance against the rotations of the rotary shaft 51 restrains the rotations of the above-mentioned screw shaft 46. The torque operates as resistance to restrain linear motion of the ball nut 47 of the ball screw mechanism 45, that is, as damping force against the vibration which puts into the electromagnetic shock absorber.

However, it is feared that the following problems may arise if the electromagnetic shock absorber which generates electromagnetic resistance by converting telescopic motion of the shock absorber body into rotary motion of the motor 50 by the ball screw mechanism as described above is actually applied to a vehicle.

First, characteristics of the damping force which is generated by the electromagnetic shock absorber are taken into consideration. With the progress of the linear motion of the ball nut 47, the screw shaft 46 rotates and the rotary motion is transmitted to the motor 50 through the coupling 55. Because the moment of inertia of the coupling 55 is relatively large, its influence on damping force cannot be ignored.

Here, a description as to how the moment of inertia affects the above-mentioned damping force will be given.

The damping force generated by the electromagnetic shock absorber, namely, the resistance (load) against the telescopic motion is approximately the sum total of the moment of inertia of the rotor of the motor, the moment of inertia of the screw shaft and the coupling, and the electromagnetic resistance generated by the motor. Because angular acceleration of the rotation of the screw shaft is proportional to acceleration of the telescopic motion of the shock absorber, after all, the moment of inertia of the rotor or the coupling is proportional to the acceleration of the telescopic motion of the shock absorber.

The moment of inertia of the rotor or the coupling is proportional to the acceleration of the telescopic motion of the shock absorber and therefore the damping force which is not based on the electromagnetic force of the motor is generated against the force in an axial direction of the shock absorber which inputs from the surface of a road into the shock absorber.

Especially if sudden force in an axial direction inputs, greater damping force, namely, resistance against vibration will be generated accordingly. This exceedingly great damping force does not damp the vibration and the vibration inputs on the side of a car body as it is.

Therefore, the damping force due to the moment of inertia of the rotor or the coupling always arises prior to generation of the damping force which depends on the electromagnetic force of the motor. The rotor cannot be excluded in consideration of the constitution between the rotor and the coupling, but if it is possible to exclude or restrain the influence which the moment of inertia of the coupling exercises on the damping force, vibrational absorption capacity will be increased accordingly. This makes vehicles more comfortable to drive.

Further, referring to the electromagnetic shock absorber's controllability over damping force, although it is possible to freely control the strength of electromagnetic resistance generated by the motor, it is difficult to control the damping force which arises resulting from the moment of inertia of the coupling based on the acceleration of telescopic motion of the above-mentioned shock absorber. Thus, from the viewpoint of controlling the damping force according to traveling conditions, it is preferable that the moment of inertia of the coupling or the like is less influential.

Also, if the rotary shaft and the screw shaft are constituted as separate components and are connected to each other by the coupling, the durability of a joint of the coupling will be liable to be crucial point because rotary force resulting from vibration is always transmitted to the coupling as a shock absorber for a vehicle. Thus, in order to maintain the reliability, the coupling will be expensive.

Also, in such constitution that the rotary shaft and the screw shaft are connected by the coupling, the number of the components, such as a coupling, is increased and thus assembly line is increased, thereby also affecting productivity and production costs.

### DISCLOSURE OF THE INVENTION

An advantage of the present invention is to provide an electromagnetic shock absorber capable of excluding as much as possible the influence of the moment of inertia which is hard to control and capable of making vehicles more comfortable to drive.

An another advantage of the present invention is to provide an electromagnetic shock absorber which is durable and productive and which is capable of reducing the production costs.

In order to achieve the advantages described above, the present invention provides the electromagnetic shock absorber according to claim 1. An electromagnetic shock absorber disclosed herein comprises: a shock absorber body which makes telescopic motion in response to an input from outside; a ball screw mechanism which is arranged at the shock absorber body, converts the telescopic motion into rotary motion, and is composed of a ball nut and a screw shaft; and a motor which is provided coaxially with the shock absorber body and generates electromagnetic resistance to oppose against the rotary motion to be input into a rotary shaft of the motor, and the screw shaft and the rotary shaft of the motor are constituted as one united shaft member.

The shock absorber body has an external cylinder and an internal cylinder which is slidably inserted into the external cylinder, and the motor is coaxially connected with an upper part of the external cylinder.

The ball nut of the ball screw mechanism is fixed to an upper part of the internal cylinder. The screw shaft which is united with the rotary shaft of the motor is spirally engaged with the ball nut.

An intermediate shaft section which connects the screw shaft and the rotary shaft is rotatably supported by an inner surface of the external cylinder through a bearing.

It is arranged such that the diameter of the intermediate shaft section is thinner than that of the screw shaft and further the diameter of the rotary shaft is thinner than that of the intermediate shaft section.

Therefore, when the shock absorber body makes telescopic motion, the telescopic motion is converted into rotary motion by the ball screw mechanism and electromagnetic resistance which resists against the rotary motion is generated by the motor. The electromagnetic resistance becomes damping force which opposes against the telescopic motion of the shock absorber body and absorbs and eases impact energy. This makes a vehicle more comfortable to drive and also improves the driveability.

Because the screw shaft and the rotary shaft of the motor are formed as one united shaft member, the moment of inertia becomes small that much more. Especially at the initial stage of inputting external force into the shock absorber body, the damping force based on the moment of inertia can be reduced. Thus, it is possible to make a vehicle more comfortable to drive. Also, in a case where the damping force to be generated is controlled according to the traveling conditions, the influence which the electromagnetic force of the motor exercises on the damping force being easy to control becomes relatively large, whereby overall controllability of the damping force is drastically enhanced.

Also, because the screw shaft and the rotary shaft of the motor are formed as one united shaft member unlike the case in which the screw shaft and the rotary shaft are constituted as separate components and they are connected to each other by coupling, the number of the components can be reduced, the assembly and processing can be facilitated, the productivity can be improved, and production costs can be reduced.

### BRIEF DESCRIPTION OF THE DRAWINGS

FIG. 1 is a sectional view showing an embodiment of the present invention.
FIG. 2 is a block diagram of a conventional example.

### BEST MODE FOR CARRYING OUT THE INVENTION

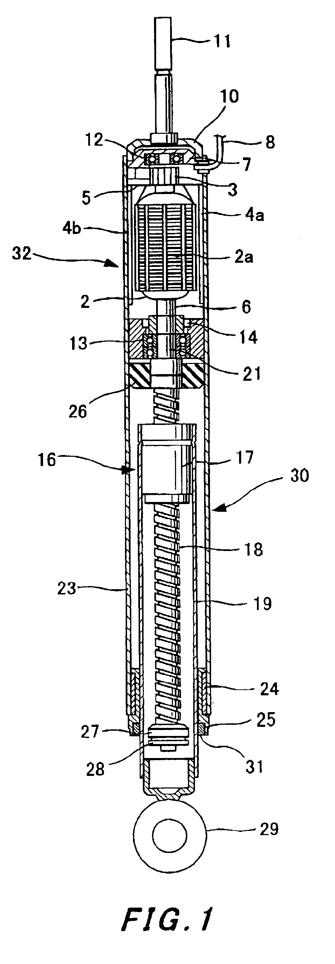

Description will subsequently be given based on an embodiment shown in FIG. 1

A shock absorber body 30 which constitutes an electromagnetic shock absorber according to the present invention comprises an external cylinder 23 and an internal cylinder 19 to be coaxially and slidably inserted into the external cylinder 23.

A motor 32 is arranged above the external cylinder 23, and a screw shaft 18 which constitutes a ball screw mechanism 16 is coaxially arranged in the internal cylinder 19. A ball nut 17 to be spirally engaged with the screw shaft 18 is fixed to an upper part of the internal cylinder 19. When the internal cylinder 19 makes telescopic motion with respect to the external cylinder 23, the screw shaft 18 to be spirally engaged with the ball nut 17 makes rotary motion at the position.

It is arranged such that a shaft section 6 of the motor 32 is provided on an extension line of the screw shaft 18 as a shaft member united with the screw shaft 18 and a rotation of the screw shaft 18 brings about a rotation of the motor 32.

In this embodiment, the motor 32 is a motor having a direct-current brush and comprises a plurality of permanent magnets 4a and 4b for generating magnetic fields, a rotor 2 to which coils 2a are wound, a commutator 3, a brush 5, a brush holder 7, a shaft section 6, and the like. Further, an extension section of the external cylinder 23 covers the outside of the above components.

The external cylinder 23 has a role of a frame of a stator of the motor 32 and the external cylinder 23 also has a role of an external cylinder to cover a motor section of the electromagnetic shock absorber.

Upper and lower ends of the shaft section 6 of the motor 32 are rotatably supported in the external cylinder 23 via ball bearings 12 and 22 which are installed in the external cylinder 23.

The plurality of coils 2a of the rotor 2 which is attached to the shaft section 6 are connected to the commutator 3 installed above the shaft section 6 via a plurality of conductive wires (not shown in the drawing). The commutator 3 is in contact with the brush 5 which is connected in the external cylinder 23 through the brush holder 7 installed in a lateral direction of the commutator 3. Further, the brush 5 is connected with lead wires 8.

A cap 10 is connected to an upper end of the external cylinder 23 and thus permeation of water and muddy water into the external cylinder 23 is prevented. A fastening shaft section 11 for attaching the electromagnetic shock absorber to the car body side is provided as a projection at an upper end of the cap 10 and coaxially with the external cylinder 23.

Further, the permanent magnets 4a and 4b are located around the rotor 2 and installed at an internal circumference of the external cylinder 23. Thus, magnetic fields rest on the rotor 2. In this case, the external cylinder 23 functions not only as the frame of the motor 32, but also as a yoke of the stator.

Additionally, the permanent magnets 4a and 4b are arranged in the external cylinder 23 in such a manner that they face to each other. However, it is justifiable that the number of the arrangement is more than two as long as the permanent magnets are installed in such a manner that magnetic fields are generated.

Additionally, the lead wires 8 are connected with a control circuit or the like (not shown in the drawing) or the lead wires 8 which are connected with the respective magnetic poles are directly connected with each other. Thus, the coils are connected to a closed circuit so that electromagnetic torque which resists the rotations of the shaft section 6 is generated.

In this case, if there is no particular need for providing the control circuit, it will be unnecessary to arrange the lead wires 8 outside the external cylinder 23. It will be sufficient if the respective magnetic poles are short-circuited in the external cylinder 23.

In this embodiment, a case in which a motor having a direct-current brush is employed as the motor 32 is described, but a direct-current brushless motor, an alternate-current motor, or an induction motor may be employed.

Further, it will be sufficient if permanent magnets are fixed on the side of the rotor of the shaft section 6 and coils are arranged at the internal circumference of the external cylinder 23.

An eye mounting bracket 29 is attached to a lower end of the internal cylinder 19 of the shock absorber body 30, and due to the eye mounting bracket 29, the internal cylinder 19 is connected on the axle side of the vehicle.

Further, the internal cylinder 19 is supported by a bush 24 (bearing member) of a rod guide 25 installed at the internal circumference of a lower end of the external cylinder 23 in such a manner that the internal cylinder 19 can freely slide with respect to the external cylinder 23. Further, it is arranged such that due to a seal 31 provided at a lower end of the rod guide 25, permeation of dust, rainwater, or the like into the shock absorber body is prevented.

Additionally, the rod guide 25 can be omitted, but it is preferable to provide the rod guide 25 for the purposes of preventing the buckling of the internal cylinder 19 and smoothly guiding the linear motion.

Further, the ball nut 17 of the ball screw mechanism 16 is installed at an upper end of the internal cylinder 19 in such a state that the ball nut 17 is in a case in order for the internal cylinder 19 to make slide motion with respect to the external cylinder 23, in other words, in order to convert telescopic motion into rotary motion. The screw shaft 18 to be spirally engaged with the ball nut 17 is arranged in such a manner that the screw shaft 18 goes through the shaft center of the internal cylinder 19, and the screw shaft 18 rotates at the position due to the linear motion of the internal cylinder 19.

Constitution of the ball nut 17 is not particularly shown in the drawing. However, a ball retention groove in a spiral shape is installed at an internal circumference of the ball nut 17 so that the ball retention groove fits in with a thread groove in a spiral shape of the screw shaft 18. A great number of balls are arranged at the ball retention groove and a channel which enables the communicative connection of both ends of the spiral ball retention groove is provided in the ball nut 17 so that the great number of balls can circulate. When the screw shaft 18 is spirally engaged with the ball nut 17, the balls fit into the thread groove in a spiral shape of the screw shaft 18. Due to movement of the ball nut 17 in a vertical direction, the screw shaft 18 makes rotary motion by force. At this time, the balls themselves rotate due to frictional force of the balls and the thread groove of the screw shaft 18, thereby enabling smoother motion as compared with a rack-and-pinion mechanism or the like.

A first cushion member 27 composed of rubber or the like is installed at a lower end of the screw shaft 18 through a mounting and fastening tool 28. Thus, when the internal cylinder 19 makes a stroke up to the maximum descent position which is a lower end of the screw shaft 18, the first cushion member 27 comes into contact with the ball nut 17 from a lower surface and absorbs impact shock resulting from a sudden collision. Also, the first cushion member 27 is utilized as a stopper for restraining a further descent stroke of the internal cylinder 19.

Further, a second cushion member 26, which is located at the lower surface of a bearing retaining member 15 for retaining a ball bearing 13 to rotatably support the screw shaft 18 and which is composed of rubber or the like, is inserted into and retained at an upper internal circumference of the external cylinder 23. When the internal cylinder 19 makes a stroke up to the maximum ascent position, the second cushion member 26 comes into contact with an upper surface of the ball nut 17 and absorbs impact shock of the ball nut 17 resulting from a sudden collision. Also, the second cushion member 26 is utilized as a stopper for restraining a further ascent stroke of the internal cylinder 19.

As described above, the shaft section 6 of the motor 32 is formed at an upper part of the screw shaft 18 as one body with the screw shaft 18, and the screw shaft 18 and the shaft section 6 constitute a piece of shaft member. An intermediate shaft section 21 which connects the screw shaft 18 and the shaft section 6 as a filler is formed in such a manner that the intermediate shaft section 21 is the middle of the screw shaft 18 and the shaft section 6 in the size of diameter. And the screw shaft 18 and the shaft section 6 are rotatably supported at the intermediate shaft section 21 by the ball bearing 13. The ball bearing 13 is fixed by the cylindrical bearing retention member 15 which is fixed to an inner surface of the external cylinder 23. Additionally, a fastening nut 14 is spirally engaged with the intermediate shaft section 21 and supports the intermediate shaft section 21 in such a manner that both ends of the ball bearing 13 is sandwiched between the fastening nut 14 and a shoulder of the intermediate shaft section 21.

In the shaft member which is constituted by the screw shaft 18 and the shaft section 6, the diameters of the screw shaft 18, the intermediate shaft section 21, and the shaft section 6 become thinner in order. Thus, when the electromagnetic shock absorber is assembled, the screw shaft 18 is spirally engaged with the ball nut 17, further the intermediate shaft section 21 is inserted into the ball bearing 13, and finally the shaft section 6 is inserted into the motor 32.

Because the screw shaft 18 and the shaft section 6 are united as described above, the rotary motion of the screw shaft 18 is directly transmitted to the motor 32.

When pushing up force, vibration, or the like from the surface of a road acts on the internal cylinder 19 of the shock absorber body 30 while a vehicle is traveling, the internal cylinder 19 makes linear motion in a telescopic direction and along the external cylinder 23. The linear motion is converted into the rotary motion of the screw shaft 18 by the ball screw mechanism 16 which is composed of the ball nut 17 and the screw shaft 18.

Then, the rotary motion of the screw shaft 18 is transmitted to the shaft section 6 which is united with the screw shaft 18. When the shaft section 6 of the motor 32 makes rotary motion, the rotor 2 which has the coils 2a and is installed at the shaft section 6 rotates and the coils 2a go across magnetic fields of the permanent magnets 4a and 4b, whereby induced electromotive force is generated. Based on the generation, torque which resists against the rotations of the shaft section 6 is generated due to electromagnetic force of the motor 32.

Because reverse torque resulting from the electromagnetic force of the motor 32 restrains the rotary motion of the screw shaft 18, the reverse torque operates as damping force which restrains the linear motion of the internal cylinder 19 in a telescopic direction and along the external cylinder 23. Thus, impact energy from the surface of a road is absorbed and eased, a vehicle is made more comfortable to drive, and driveability is improved.

Here, the damping force which is generated at the electromagnetic shock absorber is, to be precise, the sum total of the moment of inertia of the rotor 2 of the motor 32, the moment of inertia of the screw shaft 18, and the electromagnetic resistance generated by the motor 32. However, the shaft section 6 and the screw shaft 18 are united. Thus, there is no need of a coupling for connecting the shaft section 6 and the screw shaft 18. The moment of inertia becomes small that much more.

The moment of inertia of the screw shaft 18 is based on the acceleration of the thrust from the surface of a road and the strength of the moment of inertia cannot freely be controlled unlike the electromagnetic force generated by the motor 32. Therefore, the larger the moment of inertia of the screw shaft 18 is, the harder the control of damping force by the electromagnetic shock absorber is.

However, because there is no coupling to be connected with the screw shaft 18 according to the present invention, the moment of inertia becomes small that much more. Especially at the initial stage of inputting external force into the shock absorber body 30, it is possible to prevent the damping force based on the moment of inertia from becoming too large.

Thus, it is possible to make a vehicle more comfortable to drive. Also, in a case where the damping force to be generated is controlled according to the traveling conditions, the influence which the electromagnetic force of the motor 32 exercises on the damping force being easy to control becomes relatively large, whereby overall controllability of the damping force is drastically enhanced.

Also, because the screw shaft 18 and the shaft section 6 of the motor 32 are formed as one united shaft member unlike the case in which the screw shaft 18 and the shaft section 6 are constituted as separate components and they are connected to each other by coupling, the number of the components can be reduced, the assembly and processing can be facilitated, the productivity can be improved, and production costs can be reduced.

Further, because the coupling for connecting the screw shaft 18 and the shaft section 6 is not required, it is possible to shorten the length in an axial direction and to lighten the shock absorber as a whole.

The diameters of the screw shaft 18, the intermediate shaft section 21, and the shaft section 6 become thinner in order. Thus, when the electromagnetic shock absorber is assembled, the screw shaft 18 is spirally engaged with the ball nut 17, further the intermediate shaft section 21 is inserted into the ball bearing 13, and finally the shaft section 6 can be inserted into the motor 32. Thus, this facilitates the assembly and improves the productivity.

The present invention is not restricted to the embodiments described above. It is obvious that the present invention includes various improvement and modification which can be made by a person skilled in the art within a scope of technical ideas given in the following claims.

### INDUSTRIAL APPLICABILITY

The electromagnetic shock absorber according to the present invention can be applied as a shock absorber for a vehicle.

## Claims

1. An electromagnetic shock absorber comprising:
- a shock absorber body (30) which makes telescopic motion in response to an input from outside;
- a ball screw mechanism (16), which is arranged at the shock absorber body (30), converts the telescopic motion into rotary motion, and is composed of a ball nut (17) and a screw shaft (18);
- a motor (32) which is provided coaxially with the shock absorber body (30) and generates electromagnetic resistance to oppose against the rotary motion to be input into a rotary shaft (6) of the motor (32),
wherein the screw shaft (18) and the rotary shaft (6) of the motor (32) being constituted as one united shaft member, and
wherein the shock absorber body has an external cylinder (23) and an internal cylinder (19) to be slidably inserted into the external cylinder (23), and
wherein the ball nut (17) of the ball screw mechanism (16) is fixed to an upper part of the internal cylinder (19), and the screw shaft (18) which is united with the rotary shaft (6) of the motor (32) is spirally engaged with the ball nut (17),
**characterized in that**
the external cylinder (23) is made of one single piece of straight tubular material having a constant diameter and the motor (32) is coaxially connected with an upper part of the external cylinder (23), and
the screw shaft (18) and the rotary shaft (6) are connected by an intermediate shaft section (21) which is rotatably supported by an inside wall of the external cylinder (23) through a bearing (13).

2. An electromagnetic shock absorber according to claim 1, **characterized in that** a diameter of the intermediate shaft section (21) is thinner than that of the screw shaft (18) and further a diameter of the rotary shaft (6) is thinner than that of the intermediate shaft section (21).

3. An electromagnetic shock absorber according to claim 1, **characterized in that** a first cushion member (27) which comes into contact with a lower surface of the ball nut (17) at a maximum descent stroke position of the internal cylinder (19) is installed at a lower end of the screw shaft (18).

4. An electromagnetic shock absorber according to claim 1, **characterized in that** a second cushion member (26) which comes into contact with an upper surface of the ball nut (17) at a maximum ascent stroke position of the internal cylinder (19) is installed at a lower surface of the bearing(18).

## Patentansprüche

1. Elektromagnetischer Stoßdämpfer, der umfasst:
einen Stoßdämpferkörper (30), der eine Teleskopbewegung in Reaktion auf eine Eingabe von außen durchführt;
einen Kugelspindelmechanismus (16), der an dem Stoßdämpferkörper (30) angeordnet ist, die Teleskopbewegung in Drehbewegung umwandelt und aus einer Kugelmutter (17) sowie einer Schraubenwelle (18) besteht;
einen Motor (32), der koaxial zu dem Stoßdämpferkörper (30) vorhanden ist und elektromagnetischen Widerstand erzeugt, der der Drehbewegung entgegenwirkt, die in eine Drehwelle (6) des Motors (32) eingeleitet wird,
wobei die Schraubenwelle (18) und die Drehwelle (6) des Motors (32) als ein einheitliches Wellenelement ausgebildet sind, und
wobei der Stoßdämpferkörper einen äußeren Zylinder (23) und einen inneren Zylinder (19) hat, der gleitend in den äußeren Zylinder (23) eingeführt ist, und
wobei die Kugelmutter (17) des Kugelspindelmechanismus (16) an einem oberen Teil des inneren Zylinders (19) befestigt ist und die Schraubenwelle (18), die eine Einheit mit der Drehwelle (6) des Motors (32) bildet, in Spiraleingriff mit der Kugelmutter (17) ist,
**dadurch gekennzeichnet, dass**
der äußere Zylinder (23) aus einem Stück aus geradem röhrenförmigen Material mit einem konstanten Durchmesser besteht und der Motor (32) koaxial mit einem oberen Teil des äußeren Zylinders (23) verbunden ist, und
die Schraubenwelle (18) und die Drehwelle (6) durch einen Zwischenwellenabschnitt (21) verbunden sind, der von einer Innenwand des äußeren Zylinders (23) über ein Lager (13) drehbar getragen wird.

2. Elektromagnetischer Stoßdämpfer nach Anspruch 1, **dadurch gekennzeichnet, dass** ein Durchmesser des Zwischenwellenabschnitts (21) dünner ist als der der Schraubenwelle (18), und des Weiteren ein Durchmesser der Drehwelle (6) dünner ist als der des Zwischenwellenabschnitts (21).

3. Elektromagnetischer Stoßdämpfer nach Anspruch 1, **dadurch gekennzeichnet, dass** ein erstes Dämpfelement (27), das bei einer maximalen Abwärtshubposition des inneren Zylinders (19) mit einer unteren Fläche der Kugelmutter (17) in Kontakt kommt, an einem unteren Ende der Schraubenwelle (18) installiert ist.

4. Elektromagnetischer Stoßdämpfer nach Anspruch 1, **dadurch gekennzeichnet, dass** ein zweites Dämpfelement (26), das bei einer maximalen Aufwärtshubposition des inneren Zylinders (19) mit einer oberen Fläche der Kugelmutter (17) in Kontakt kommt, an einer unteren Fläche des Lagers (18) installiert ist.

## Revendications

1. Amortisseur électromagnétique comprenant :
un corps d'amortisseur (30) qui réalise un mouvement télescopique en réponse à une entrée provenant de l'extérieur ;
un mécanisme à vis sphérique (16) qui est agencé au niveau du corps d'amortisseur (30), transforme le mouvement télescopique en mouvement rotatif, et est composé d'un écrou sphérique (17) et d'une tige de vis (18) ;
un moteur (32) qui est prévu de manière coaxiale avec le corps d'amortisseur (30) et génère une résistance électromagnétique pour empêcher le mouvement rotatif d'être introduit dans un arbre rotatif (6) du moteur (32),
dans lequel la tige de vis (18) et l'arbre rotatif (6) du moteur (32) sont constitués comme un élément d'arbre unifié, et
dans lequel le corps d'amortisseur a un cylindre externe (23) et un cylindre interne (19) destiné à être inséré de manière coulissante dans le cylindre externe (23) , et
dans lequel l'écrou sphérique (17) du mécanisme à vis sphérique (16) est fixé sur une partie supérieure du cylindre interne (19) et la tige de vis (18) qui est assemblée à l'arbre rotatif (6) du moteur (32) est mise en prise en spirale avec l'écrou sphérique (17),
**caractérisé en ce que** :
le cylindre externe (23) est réalisé avec une seule pièce de matériau tubulaire droit ayant un diamètre constant et le moteur (32) est raccordé de manière coaxiale avec une partie supérieure du cylindre externe (23), et
la tige de vis (18) et l'arbre rotatif (6) sont raccordés par une section d'arbre intermédiaire (21) qui est supportée de manière rotative par une paroi interne du cylindre externe (23) par l'intermédiaire d'un palier (13).

2. Amortisseur électromagnétique selon la revendication 1, **caractérisé en ce qu'**un diamètre de la section d'arbre intermédiaire (21) est plus fin que celui de la tige de vis (18) et en outre un diamètre de l'arbre rotatif (6) est plus fin que celui de la section d'arbre intermédiaire (21).

3. Amortisseur électromagnétique selon la revendication 1, **caractérisé en ce qu'**un premier élément de coussin (27) qui vient en contact avec une surface inférieure de l'écrou sphérique (17) dans une position de course descendante maximum du cylindre interne (19) est installé au niveau d'une extrémité inférieure de la tige de vis (18).

4. Amortisseur électromagnétique selon la revendication 1, **caractérisé en ce qu'**un second élément de coussin (26) qui vient en contact avec une surface supérieure de l'écrou sphérique (17) à une position de course ascendante maximum du cylindre interne (19) est installé au niveau d'une surface inférieure du palier (18).
